# EUROPEAN PATENT SPECIFICATION

(11) **EP 3 462 779 B1**
(45) Date of publication and mention of the grant of the patent: **30.12.2020**
(21) Application number: 18189865.1
(22) Date of filing: 30.09.2013
(51) Int. Cl.: H04W 36/06, H04W 16/14, H04W 88/08

(54) **CHANNEL SWITCHING METHOD AND DEVICE**
KANALUMSCHALTVERFAHREN UND -EINRICHTUNG
PROCÉDÉ DE COMMUTATION DE CANAL ET DISPOSITIF

(43) Date of publication of application: 03.04.2019
(62) Document number(s) of the earlier application(s) in accordance with Art. 76 EPC: 13886164.6 / 2 874 436
(73) Proprietor: Huawei Device (Shenzhen) Co., Ltd., Shenzhen, Guangdong 518129 (CN)
(72) Inventor: ZHANG, Kui, SHENZHEN, Guangdong 518129 (CN); YAO, Xinzheng, SHENZHEN, Guangdong 518129 (CN); ZHAO, Peng, SHENZHEN, Guangdong 518129 (CN)
(74) Representative: Körber, Martin Hans

(56) References cited:
- CN-A- 102 724 727
- CN-A- 102 917 406
- US-A1- 2009 201 851
- US-A1- 2012 314 663

## Description

### TECHNICAL FIELD

The present invention relates to the field of communications technologies, and in particular, to a channel switching method, device and chip.

### BACKGROUND

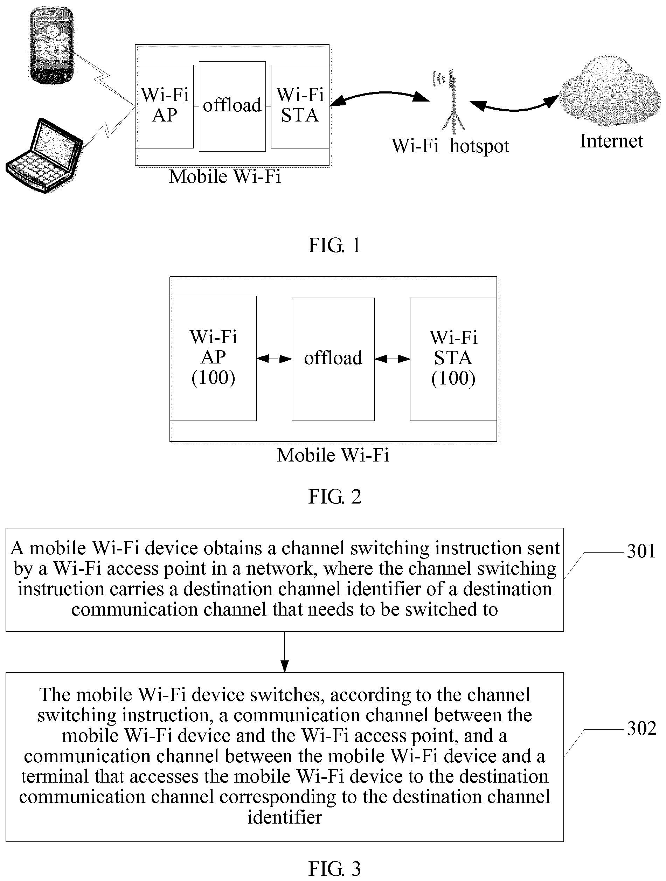

Along with popularization of 5G Wi-Fi networks at present, application of 5G Wi-Fi products becomes increasingly extensive. Currently, both the Conformity European (CE, Conformity European) and the Federal Communications Commission (FCC, Federal Communications Commission) require that, when used on some channels, 5G Wi-Fi should support a dynamic frequency selection (DFS, Dynamic Frequency Selection) function. In addition, the CE and FCC currently categorize Wi-Fi devices into wireless local area network access ends (Wi-Fi AP, Wi-Fi Access Point) and wireless local area network clients (Wi-Fi STA, Wi-Fi Station). A general application scenario is shown in FIG. 1. A Wi-Fi access point (namely, a Wi-Fi hotspot) in FIG. 1 detects a radar signal; and after discovering interference, instructs an accessed mobile Wi-Fi device (namely, a Mobile Wi-Fi in FIG. 1) to stop data information transmission. The Mobile Wi-Fi migrates a channel between the Mobile Wi-Fi and the Wi-Fi hotspot, and a channel between the Mobile Wi-Fi and a terminal device according to a dynamic frequency selection standard.

However, for a current Mobile Wi-Fi device, channels are migrated independently; as a result, the Mobile Wi-Fi device has problems in compatibility, a throughput, and stability.

US 2009/201851 A refers to a method including receiving a prepare-to-change message, wherein the prepare-to-change message indicates instructions to prepare to change channels and includes a designated channel, and forwarding the prepare-to-change message to one or more child nodes. The method also includes receiving a ready-to-change message from the one or more child nodes, and transmitting a change-to-channel message to the one or more child nodes, wherein the change-to-channel message indicates instructions to switch to the designated channel. The method also includes receiving an acknowledgement message from the one or more child nodes, and changing to the designated channel.

### SUMMARY

Embodiments of the present invention provide a channel switching method, chip and device, which are used to solve the problem that compatibility, a throughput, and stability of a Mobile Wi-Fi in the prior art are all poor.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

Specific technical solutions of the embodiments of the present invention are as follows:
A first aspect of the embodiments of the present invention provides a channel switching method, including:
obtaining, by a mobile Wi-Fi device, a channel switching instruction sent by a Wi-Fi access point in a network, where the channel switching instruction carries a destination channel identifier; and
switching, by the mobile Wi-Fi device according to the channel switching instruction, a communication channel between the mobile Wi-Fi device and the Wi-Fi access point, and a communication channel between the mobile Wi-Fi device and a terminal that accesses the mobile Wi-Fi device to a destination communication channel corresponding to the destination channel identifier carried in the channel switching instruction.

With reference to the first aspect, in a first possible implementation manner, the switching, by the mobile Wi-Fi device according to the channel switching instruction, a communication channel between the mobile Wi-Fi device and the Wi-Fi access point, and a communication channel between the mobile Wi-Fi device and a terminal that accesses the mobile Wi-Fi device to a destination communication channel corresponding to the destination channel identifier includes:
controlling, by the mobile Wi-Fi device according to the channel switching instruction, the communication channel between the mobile Wi-Fi device and the Wi-Fi access point to be switched to the destination communication channel corresponding to the destination channel identifier, and generating a switching completion signal; and
switching, by the mobile Wi-Fi device according to the switching completion signal, the communication channel between the mobile Wi-Fi device and the terminal that accesses the mobile Wi-Fi device to the destination communication channel corresponding to the destination channel identifier.

With reference to the first aspect, in a second possible implementation manner, the switching, by the mobile Wi-Fi device according to the channel switching instruction, a communication channel between the mobile Wi-Fi device and the Wi-Fi access point, and a communication channel between the mobile Wi-Fi device and a terminal that accesses the mobile Wi-Fi device to a destination communication channel corresponding to the destination channel identifier includes:
controlling, by the mobile Wi-Fi device according to the channel switching instruction, the communication channel between the mobile Wi-Fi device and the Wi-Fi access point to be switched to the destination communication channel corresponding to the destination channel identifier; and at the same time controlling the communication channel between the mobile Wi-Fi device and the terminal that accesses the mobile Wi-Fi device to be switched to the destination communication channel corresponding to the destination channel identifier.

With reference to the first aspect, the first possible implementation manner of the first aspect, or the second possible implementation manner of the first aspect, in a third possible implementation manner, before the obtaining, by a mobile Wi-Fi device, a channel switching instruction sent by a Wi-Fi access point in a network, the method further includes:
receiving, by the mobile Wi-Fi device, a termination instruction that is sent by the Wi-Fi access point in the network and used for instructing the mobile Wi-Fi device to stop transmitting data; and
terminating, by the mobile Wi-Fi device according to the termination instruction, data transmission performed by the mobile Wi-Fi device on the communication channel between the mobile Wi-Fi device and the Wi-Fi access point.

With reference to the third possible implementation manner, in a fourth possible implementation manner, after the terminating, by the mobile Wi-Fi device according to the termination instruction, data transmission performed by the mobile Wi-Fi device on the communication channel between the mobile Wi-Fi device and the Wi-Fi access point, the method further includes:
sending the termination instruction to the terminal that accesses the mobile Wi-Fi device, so as to instruct the terminal to stop transmitting data on the communication channel on which the terminal communicates with the mobile Wi-Fi device.

With reference to the first aspect, the first possible implementation manner of the first aspect, the second possible implementation manner of the first aspect, the third possible implementation manner of the first aspect, or the fourth possible implementation manner of the first aspect, in a fifth possible implementation manner, after the switching, by the mobile Wi-Fi device according to the channel switching instruction, a communication channel between the mobile Wi-Fi device and the Wi-Fi access point, and a communication channel between the mobile Wi-Fi device and a terminal that accesses the mobile Wi-Fi device to a destination communication channel corresponding to the destination channel identifier, the method further includes:
sending, by the mobile Wi-Fi device, information including the destination channel identifier to the terminal that accesses the mobile Wi-Fi device, where the information is used to instruct the terminal to switch from the communication channel on which the terminal communicates with the mobile Wi-Fi device to the destination communication channel corresponding to the destination channel identifier.

A second aspect of the embodiments of the present invention provides a channel switching apparatus, including:
an obtaining module, configured to obtain, by using a receiver in a mobile Wi-Fi device, a channel switching instruction sent by a Wi-Fi access point in a network, where the channel switching instruction carries a destination channel identifier; and
a processing module, configured to switch, according to the channel switching instruction, a communication channel between the mobile Wi-Fi device and the Wi-Fi access point, and a communication channel between the mobile Wi-Fi device and a terminal that accesses the mobile Wi-Fi device to a destination communication channel corresponding to the destination channel identifier carried in the channel switching instruction.

With reference to the second aspect, in a first possible implementation manner, the processing module includes:
a control unit, configured to control, according to the channel switching instruction, the communication channel between the mobile Wi-Fi device and the Wi-Fi access point to be switched to the destination communication channel corresponding to the destination channel identifier, and generate a switching completion signal; and
a switching unit, configured to switch, according to the switching completion signal, the communication channel between the mobile Wi-Fi device and the terminal that accesses the mobile Wi-Fi device to the destination communication channel corresponding to the destination channel identifier.

With reference to the second aspect, in a second possible implementation manner, the processing module is further configured to: control, according to the channel switching instruction, the communication channel between the mobile Wi-Fi device and the Wi-Fi access point to be switched to the destination communication channel corresponding to the destination channel identifier; and at the same time control the communication channel between the mobile Wi-Fi device and the terminal that accesses the mobile Wi-Fi device to be switched to the destination communication channel corresponding to the destination channel identifier.

With reference to the second aspect, in a third possible implementation manner, the obtaining module is further configured to receive, by using the receiver in the mobile Wi-Fi device, a termination instruction that is sent by the Wi-Fi access point in the network and used for instructing the mobile Wi-Fi device to stop transmitting data; and
the processing module is further configured to terminate, according to the termination instruction, data transmission performed by the mobile Wi-Fi device on the communication channel between the mobile Wi-Fi device and the Wi-Fi access point.

With reference to the third possible implementation manner, in a fourth possible implementation manner, the processing module is further configured to send the termination instruction to the terminal that accesses the mobile Wi-Fi device, so as to instruct the terminal to stop transmitting data on the communication channel on which the terminal communicates with the mobile Wi-Fi device.

With reference to the first aspect, the first possible implementation manner of the first aspect, the second possible implementation manner of the first aspect, the third possible implementation manner of the first aspect, or the fourth possible implementation manner of the first aspect, in a fifth possible implementation manner, the processing module is further configured to send information including the destination channel identifier to the terminal that accesses the mobile Wi-Fi device, where the information is used to instruct the terminal to switch from the communication channel on which the terminal communicates with the mobile Wi-Fi device to the destination communication channel corresponding to the destination channel identifier.

A third aspect of the embodiments of the present invention provides a mobile Wi-Fi device, including:
a receiver, configured to obtain a channel switching instruction sent by a Wi-Fi access point in a network, where the channel switching instruction carries a destination channel identifier; and
a Wi-Fi processing chip, connected to the receiver and configured to switch, according to the channel switching instruction, a communication channel between the mobile Wi-Fi device and the Wi-Fi access point, and a communication channel between the Wi-Fi device and a terminal that accesses the mobile Wi-Fi device to a destination communication channel corresponding to the destination channel identifier carried in the channel switching instruction.

With reference to the third aspect, in a first possible implementation manner, the Wi-Fi processing chip is further configured to: control, according to the channel switching instruction, the communication channel between the mobile Wi-Fi device and the Wi-Fi access point to be switched to the destination communication channel corresponding to the destination channel identifier, and generate a switching completion signal; and switch, according to the switching completion signal, the communication channel between the mobile Wi-Fi device and the terminal that accesses the mobile Wi-Fi device to the destination communication channel corresponding to the destination channel identifier.

With reference to the third aspect, in a second possible implementation manner, the Wi-Fi processing chip is further configured to: control, according to the channel switching instruction, the communication channel between the mobile Wi-Fi device and the Wi-Fi access point to be switched to the destination communication channel corresponding to the destination channel identifier; and control the communication channel between the mobile Wi-Fi device and the terminal that accesses the mobile Wi-Fi device to be switched to the destination communication channel corresponding to the destination channel identifier.

With reference to the third aspect, the first possible implementation manner of the third aspect, or the second possible implementation manner of the third aspect, in a third possible implementation manner, the receiver is further configured to receive a termination instruction that is sent by the Wi-Fi access point in the network and used for instructing the mobile Wi-Fi device to stop sending data; and
the Wi-Fi processing chip is further configured to terminate, according to the termination instruction, data transmission performed by the mobile Wi-Fi device on the communication channel between the mobile Wi-Fi device and the Wi-Fi access point.

With reference to the third aspect, the first possible implementation manner of the third aspect, the second possible implementation manner of the third aspect, or the third possible implementation manner of the third aspect, in a fourth possible implementation manner, the Wi-Fi processing chip is further configured to send information including the destination channel identifier to the terminal that accesses the mobile Wi-Fi device, where the information is used to instruct the terminal to switch from the communication channel on which the terminal communicates with the mobile Wi-Fi device to the destination communication channel corresponding to the destination channel identifier.

With reference to the third aspect, in a fifth possible implementation manner, the mobile Wi-Fi device has a single Wi-Fi chip, and the Wi-Fi processing chip is disposed on the Wi-Fi chip.

In the embodiments of the present invention, a mobile Wi-Fi device obtains a channel switching instruction sent by a Wi-Fi access point in a network, where the channel switching instruction carries a destination channel identifier; and the mobile Wi-Fi device switches, according to the channel switching instruction, a communication channel between the mobile Wi-Fi device and the Wi-Fi access point, and a communication channel between the mobile Wi-Fi device and a terminal that accesses the mobile Wi-Fi device to a destination communication channel corresponding to the destination channel identifier carried in the channel switching instruction, which avoids the problem that a Wi-Fi client and a Wi-Fi access end of a mobile Wi-Fi device are switched to different communication channels when channel switching is performed. The Wi-Fi client and Wi-Fi access end of the mobile Wi-Fi device then still work on a same communication channel after performing the channel switching, thereby improving compatibility, a throughput, and stability of the mobile Wi-Fi device.

### BRIEF DESCRIPTION OF DRAWINGS

FIG. 1 is a schematic diagram of interaction of a conventional mobile Wi-Fi device in a network;
FIG. 2 is a schematic structural diagram of a conventional mobile Wi-Fi device;
FIG. 3 is a flowchart of a channel switching method according to an embodiment of the present invention;
FIG. 4 is a flowchart of another channel switching method according to an embodiment of the present invention;
FIG. 5 is a flowchart of interaction of a mobile Wi-Fi device according to an embodiment of the present invention;
FIG. 6 is a schematic structural diagram of a channel switching apparatus according to an embodiment of the present invention;
FIG. 7 is a schematic diagram of a specific structure of a processing module according to an embodiment of the present invention; and
FIG. 8 is a schematic structural diagram of a mobile Wi-Fi device according to an embodiment of the present invention.

### DESCRIPTION OF EMBODIMENTS

A mobile Wi-Fi device (Mobile Wi-Fi for short in the following) in embodiments of the present invention may serve as a Wi-Fi client (Wi-Fi STA) and a Wi-Fi access point (Wi-Fi AP). As shown in FIG. 1 to FIG. 2, a Mobile Wi-Fi in FIG. 2 has functions of both a Wi-Fi AP and a Wi-Fi STA.

As shown in FIG. 1, the Mobile Wi-Fi can access a Wi-Fi hotspot in a network by using the Wi-Fi STA, and as a result, the Mobile Wi-Fi is connected to the network (Internet) by using the Wi-Fi hotspot. The Wi-Fi AP is used for communication between the Mobile Wi-Fi and a terminal that accesses the Mobile Wi-Fi.

When the Wi-Fi hotspot in the network instructs the Mobile Wi-Fi to perform channel switching, the Wi-Fi AP and the Wi-Fi STA in the Mobile Wi-Fi need to perform channel switching. The Wi-Fi AP and Wi-Fi STA perform dynamic frequency selection separately, and a result of the performing may cause the Wi-Fi AP and Wi-Fi STA in the Mobile Wi-Fi to work on different communication channels. As a result, the Mobile Wi-Fi encounters problems of poor compatibility, a poor throughput, and poor stability.

To solve the foregoing problems, a Wi-Fi STA in a Mobile Wi-Fi in an embodiment of the present invention detects in real time whether a channel switching instruction sent by a Wi-Fi hotspot in a network is received. When the Wi-Fi STA in the Mobile Wi-Fi receives the channel switching instruction, the Mobile Wi-Fi switches a communication channel between the Mobile Wi-Fi and the Wi-Fi hotspot, and a communication channel between the Mobile Wi-Fi and a terminal that accesses the Mobile Wi-Fi to a destination communication channel corresponding to a destination channel identifier. In other words, the channel between the Mobile Wi-Fi and the terminal and the channel between the Mobile Wi-Fi and the Wi-Fi hotspot in the network are switched to a same communication channel.

The following describes the technical solutions of the present invention in detail with reference to the accompanying drawings and specific embodiments.

To solve the problems of poor compatibility, a poor throughput, and poor stability of a Mobile Wi-Fi in the prior art, this embodiment of the present invention provides a channel switching method. FIG. 3 is a flowchart of the channel switching method according to the embodiment of the present invention. The method includes:
S301: A mobile Wi-Fi device obtains a channel switching instruction sent by a Wi-Fi access point in a network, where the channel switching instruction carries a destination channel identifier of a destination communication channel that needs to be switched to.
S302: The mobile Wi-Fi device switches, according to the channel switching instruction, a communication channel between the mobile Wi-Fi device and the Wi-Fi access point, and a communication channel between the mobile Wi-Fi device and a terminal that accesses the mobile Wi-Fi device to the destination communication channel corresponding to the destination channel identifier.

In the embodiment of the present invention, the mobile Wi-Fi switches a channel between the Mobile Wi-Fi and a terminal, and a channel between the Mobile Wi-Fi and a Wi-Fi hotspot in a network to a same communication channel, thereby solving the problems of poor compatibility, a poor throughput, and poor stability of the Mobile Wi-Fi.

Specifically, when the Mobile Wi-Fi is in a time division state (offload), a Wi-Fi STA of the Mobile Wi-Fi switches from a communication channel, which the Wi-Fi STA is currently on, to the destination communication channel corresponding to the destination channel identifier carried in the channel switching instruction.

After the Wi-Fi STA in the Mobile Wi-Fi switches to the destination communication channel, the Wi-Fi STA in the Mobile Wi-Fi sends information including the destination channel identifier to a Wi-Fi AP in the Mobile Wi-Fi, and controls the Wi-Fi AP in the Mobile Wi-Fi to switch, according to the received information, from a communication channel, which the Wi-Fi AP is currently on, to the destination communication channel corresponding to the destination channel identifier. In other words, once a communication channel of the Wi-Fi hotspot is switched, the Wi-Fi hotspot notifies the Mobile Wi-Fi in time, and then the Wi-Fi STA and Wi-Fi AP in the Mobile Wi-Fi automatically switch to a same destination communication channel as that of the Wi-Fi hotspot.

For example, currently, the Wi-Fi hotspot communicates on a channel 108, and the Wi-Fi STA in the Mobile Wi-Fi connected to the Wi-Fi hotspot also communicates on the channel 108. When the Wi-Fi hotspot detects interference on the current channel, for example, when interference of a radar signal exists, the Wi-Fi hotspot determines an available communication channel 110, and the Wi-Fi hotspot switches the channel to the channel 110 for communication. Meanwhile, the Wi-Fi hotspot generates a channel switching instruction carrying an identifier of the channel 110, and sends the channel switching instruction to the Mobile Wi-Fi. Then, a Wi-Fi chip in the Mobile Wi-Fi parses the received channel switching instruction, and determines the destination channel identifier in the channel switching instruction. The Wi-Fi STA in the Mobile Wi-Fi first obtains the destination channel identifier from the channel switching instruction, and switches, according to the destination channel identifier, to the channel 110 for communication; and the Wi-Fi STA sends the channel switching instruction to the Wi-Fi AP in the Mobile Wi-Fi.

After the Wi-Fi AP in the Mobile Wi-Fi receives the channel switching instruction, the Wi-Fi AP also switches, according to the destination channel identifier, from the communication channel, which the Wi-Fi AP is currently on, to the channel 110 for communication. In this way, the Wi-Fi hotspot in the network, and the Wi-Fi STA and Wi-Fi AP in the Mobile Wi-Fi are all on the same communication channel, thereby improving compatibility, a throughput, and stability of the Mobile Wi-Fi.

Optionally, the Wi-Fi STA and Wi-Fi AP in the Mobile Wi-Fi perform channel switching successively. That is, the Wi-Fi STA in the Mobile Wi-Fi performs the channel switching first, and then the Wi-Fi AP in the Mobile Wi-Fi performs the channel switching. In the embodiment of the present invention, besides this switching manner, the Wi-Fi STA and Wi-Fi AP in the Mobile Wi-Fi may also perform the channel switching simultaneously. That is, when the Mobile Wi-Fi receives the channel switching instruction that carries the destination channel identifier and is sent by the Wi-Fi hotspot in the network, the Mobile Wi-Fi determines, according to the destination channel identifier in the channel switching instruction, the destination communication channel that needs to be switched to, and then the Mobile Wi-Fi simultaneously controls the Wi-Fi STA and the Wi-Fi AP to switch to the destination communication channel corresponding to the destination channel identifier.

After the Wi-Fi AP in the Mobile Wi-Fi also completes the channel switching, the Wi-Fi AP sends a channel switching instruction including the destination channel identifier to a client terminal that accesses the Wi-Fi AP, where the channel switching instruction may instruct the client terminal to switch from a communication channel on which the client terminal communicates with the Mobile Wi-Fi to the destination communication channel.

The Mobile Wi-Fi starts the Wi-Fi AP and Wi-Fi STA in the Mobile Wi-Fi to send data on the destination communication channel.

The Wi-Fi AP and Wi-Fi STA in the Mobile Wi-Fi described in the embodiment of the present invention are integrated in a single Wi-Fi processing chip of the Mobile Wi-Fi, where the Wi-Fi processing chip performs data exchange with the Wi-Fi hotspot and a terminal device in a manner of time division multiplexing.

By means of the channel switching process in the foregoing embodiment, a Wi-Fi hotspot, a Wi-Fi AP, a Wi-Fi STA, and a client terminal are all enabled to keep sending data on a same communication channel, thereby greatly improving compatibility, a throughput, and stability of a Mobile Wi-Fi.

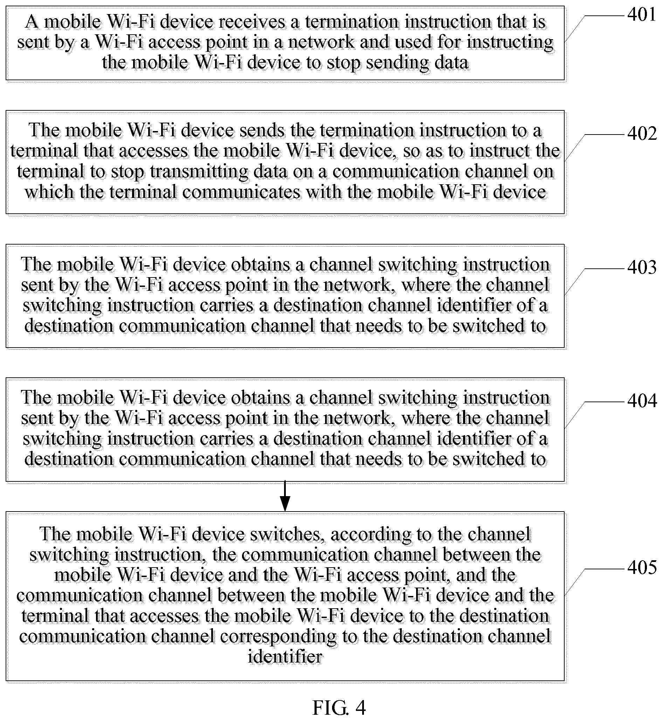

In addition, another embodiment of the present invention further provides a channel switching method. FIG. 4 is a flowchart of the channel switching method according to the another embodiment of the present invention. The method includes:
S401: A mobile Wi-Fi device receives a termination instruction that is sent by a Wi-Fi access point in a network and used for instructing the mobile Wi-Fi device to stop sending data.
S402: The mobile Wi-Fi device terminates, according to the termination instruction, data transmission performed by the mobile Wi-Fi device on a communication channel between the mobile Wi-Fi device and the Wi-Fi access point.
S403: The mobile Wi-Fi device sends the termination instruction to a terminal that accesses the mobile Wi-Fi device, so as to instruct the terminal to stop transmitting data on a communication channel on which the terminal communicates with the mobile Wi-Fi device.
S404: The mobile Wi-Fi device obtains a channel switching instruction sent by the Wi-Fi access point in the network, where the channel switching instruction carries a destination channel identifier of a destination communication channel that needs to be switched to.
S405: The mobile Wi-Fi device switches the communication channel between the mobile Wi-Fi device and the Wi-Fi access point, and the communication channel between the mobile Wi-Fi device and the terminal that accesses the mobile Wi-Fi device to the destination communication channel corresponding to the destination channel identifier.

Specifically, when detecting that communication channel switching needs to be performed, the Wi-Fi hotspot in the network first sends, to the Mobile Wi-Fi, a termination instruction used for instructing the Mobile Wi-Fi to stop sending data. According to the received termination instruction, the Mobile Wi-Fi terminates data sending, which is performed by a Wi-Fi STA and a Wi-Fi AP included in the Mobile Wi-Fi, on a communication channel that the Wi-Fi STA and Wi-Fi AP included in the Mobile Wi-Fi are currently on. The Wi-Fi AP further sends the termination instruction to the client terminal that accesses the Wi-Fi AP, where the termination instruction is used to instruct the client terminal to stop transmitting data on the communication channel on which the client terminal communicates with the mobile Wi-Fi device.

After data transmission performed by the Mobile Wi-Fi and the terminal is terminated, the Wi-Fi hotspot detects an available communication channel, and instructs the Mobile Wi-Fi to perform communication channel switching. A channel switching process of the Mobile Wi-Fi is the same as that in Embodiment 1 and is not described herein again.

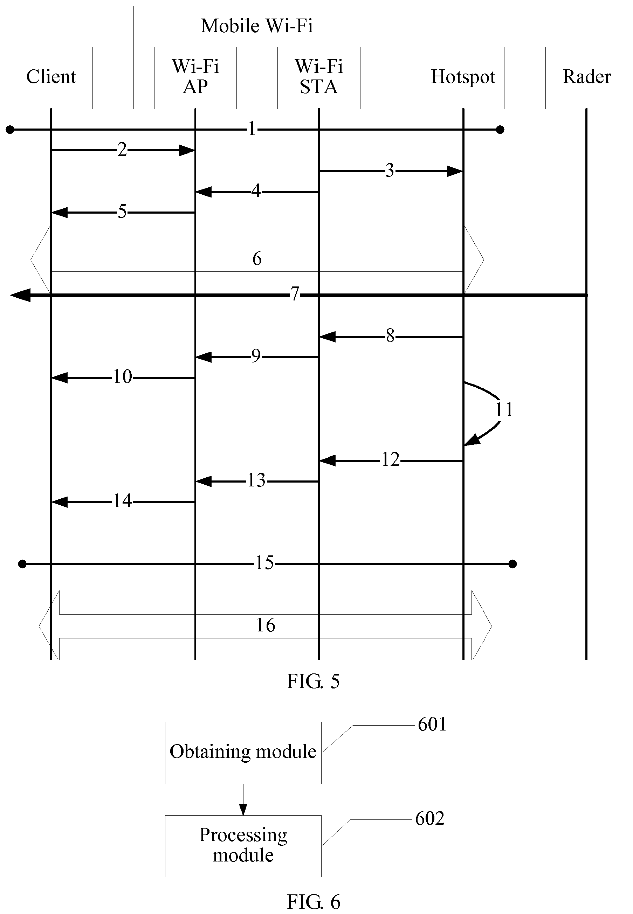

The following completely describes a channel switching process by using a flowchart. FIG. 5 is a flowchart of channel switching of a Mobile Wi-Fi according to an embodiment of the present invention. The process includes:
1. The Mobile Wi-Fi is started, a Wi-Fi AP in the Mobile Wi-Fi automatically selects a communication channel 100 and starts to send a Beacon frame, and a Wi-Fi STA in the Mobile Wi-Fi starts to scan a Wi-Fi hotspot in a network.
2. A Client (a terminal) receives the Beacon frame sent by the Wi-Fi AP in the Mobile Wi-Fi, and the Client accesses the Wi-Fi AP, and uses the communication channel 100 to communicate with the Mobile Wi-Fi.
3. The Wi-Fi STA in the Mobile Wi-Fi scans and is connected to the Wi-Fi hotspot in the network, and detects that the Wi-Fi hotspot stays on a channel 108.
4. The Mobile Wi-Fi synchronously sends, to the Wi-Fi AP, received information that the Wi-Fi hotspot camps on the channel 108.
5. The Wi-Fi AP in the Mobile Wi-Fi switches to the channel 108 and is disconnected from the Client, and the Client scans and is connected to the Wi-Fi AP again; or the Wi-Fi AP directly instructs the Client to switch to the channel 108.
6. From the Client to the Mobile Wi-Fi, and then to the Hotspot all work on the channel 108, and stable connections are established.
7. A Rader starts to send a signal on the channel 108.
8. The Wi-Fi hotspot detects signal interference and immediately instructs the Mobile Wi-Fi to stop sending data on the channel 108, and the Wi-Fi hotspot detects whether there is another available channel.
9. The Mobile Wi-Fi controls the Wi-Fi AP and Wi-Fi STA in the Mobile Wi-Fi to stop sending data on the channel 108.
10. The Wi-Fi AP in the Mobile Wi-Fi sends, to the Client, information that data cannot be sent on the channel 108, so as to instruct the Client to stop sending data on the channel 108.
11. The Wi-Fi hotspot detects that a channel 116 is available.
12. The Wi-Fi hotspot sends a channel switching instruction of switching to the channel 116 to the Mobile Wi-Fi.
13. The Mobile Wi-Fi controls the Wi-Fi AP and Wi-Fi STA in the Mobile Wi-Fi to switch to the channel 116.
14. The Wi-Fi AP in the Mobile Wi-Fi instructs the Client to switch to the channel 116.
15. The Client, the Mobile Wi-Fi, and the Wi-Fi hotspot all switch the channel to the channel 116.
16. The whole network starts to work on the channel 116.

In the foregoing process, differences may exist in details of step 8 to step 15 for different providers, a sequence of performing the steps is not limited, but a principle is the same as that of the technical solutions of the present invention. Therefore, a change in details of the steps shall still fall within the scope of the technical solutions of the present invention.

By means of the channel switching process in the foregoing embodiment, a Wi-Fi hotspot, a Wi-Fi AP, a Wi-Fi STA, and a client terminal are all enabled to keep sending data on a same communication channel, thereby greatly improving compatibility, a throughput, and stability of a Mobile Wi-Fi.

Based on a same invention idea, an embodiment of the present invention further provides a channel switching apparatus. The apparatus is applied to a mobile Wi-Fi device with a single Wi-Fi chip. FIG. 6 is a schematic structural diagram of the channel switching apparatus according to the embodiment of the present invention. The channel switching apparatus includes:
an obtaining module 601, configured to obtain, by using a receiver in a mobile Wi-Fi device, a channel switching instruction sent by a Wi-Fi access point in a network, where the channel switching instruction carries a destination channel identifier; and
a processing module 602, configured to switch, according to the channel switching instruction, a communication channel between the mobile Wi-Fi device and the Wi-Fi access point, and a communication channel between the mobile Wi-Fi device and a terminal that accesses the mobile Wi-Fi device to a destination communication channel corresponding to the destination communication channel identifier carried in the channel switching instruction.

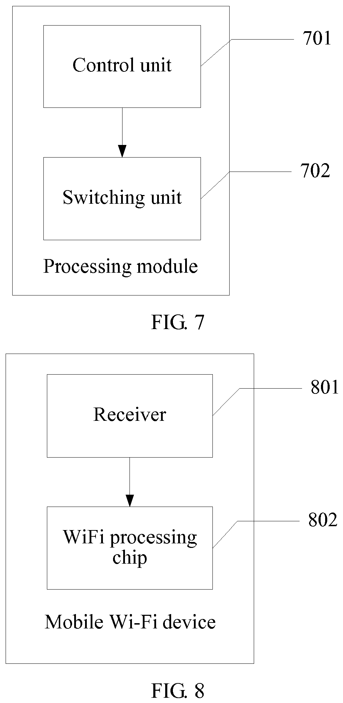

Further, as shown in FIG. 7, the processing module 602 in the embodiment of the present invention includes:
a control unit 701, configured to control, according to the channel switching instruction, the communication channel between the mobile Wi-Fi device and the Wi-Fi access point to be switched to the destination communication channel corresponding to the destination channel identifier, and generate a switching completion signal; and
a switching unit 702, connected to the control unit 701 and configured to switch, according to the switching completion signal, the communication channel between the mobile Wi-Fi device and the terminal that accesses the mobile Wi-Fi device to the destination communication channel corresponding to the destination communication identifier.

Further, in the embodiment of the present invention, the processing module 602 is further configured to: control, according to the channel switching instruction, the communication channel between the mobile Wi-Fi device and the Wi-Fi access point to be switched to the destination communication channel corresponding to the destination communication identifier; and at the same time control the communication channel between the mobile Wi-Fi device and the terminal that accesses the mobile Wi-Fi device to be switched to the destination communication channel corresponding to the destination communication channel identifier.

Further, in the embodiment of the present invention, the obtaining module 601 is further configured to receive, by using the receiver in the mobile Wi-Fi device, a termination instruction that is sent by the Wi-Fi access point in the network and used for instructing the mobile Wi-Fi device to stop transmitting data; and
the processing module 602 is further configured to terminate, according to the termination instruction, data transmission performed by the mobile Wi-Fi device on the communication channel between the mobile Wi-Fi device and the Wi-Fi access point.

Further, the processing module 602 in the embodiment of the present invention is further configured to send the termination instruction to the terminal that accesses the mobile Wi-Fi device, so as to instruct the terminal to stop transmitting data on the communication channel on which the terminal communicates with the mobile Wi-Fi device.

Further, in the embodiment of the present invention, the processing module 602 is further configured to send information including the destination channel identifier to the terminal that accesses the mobile Wi-Fi device, where the information is used to instruct the terminal to switch from the communication channel between the terminal and the mobile Wi-Fi device to the destination communication channel corresponding to the destination channel identifier.

Corresponding to a channel switching method in an embodiment of the present invention, an embodiment of the present invention further provides a mobile Wi-Fi device. FIG. 8 is a schematic structural diagram of the mobile Wi-Fi device according to the embodiment of the present invention. The mobile Wi-Fi device includes:
a receiver 801, configured to obtain a channel switching instruction sent by a Wi-Fi access point in a network, where the channel switching instruction carries a destination channel identifier; and
a Wi-Fi processing chip 802, connected to the receiver and configured to switch, according to the channel switching instruction, a communication channel between the mobile Wi-Fi device and the Wi-Fi access point, and a communication channel between the Wi-Fi device and a terminal that accesses the mobile Wi-Fi device to a destination communication channel corresponding to the destination channel identifier carried in the channel switching instruction.

Further, in the embodiment of the present invention, the Wi-Fi processing chip 802 is further configured to: control, according to the channel switching instruction, the communication channel between the mobile Wi-Fi device and the Wi-Fi access point to be switched to the destination communication channel corresponding to the destination channel identifier, and generate a switching completion signal; and switch, according to the switching completion signal, the communication channel between the mobile Wi-Fi device and the terminal that accesses the mobile Wi-Fi device to the destination communication channel corresponding to the destination channel identifier.

Further, in the embodiment of the present invention, the Wi-Fi processing chip 802 is further configured to control, according to the channel switching instruction, the communication channel between the mobile Wi-Fi device and the Wi-Fi access point to be switched to the destination communication channel corresponding to the destination channel identifier; and control the communication channel between the mobile Wi-Fi device and the terminal that accesses the mobile Wi-Fi device to be switched to the destination communication channel corresponding to the destination channel identifier.

Further, in the embodiment of the present invention, the receiver 801 is further configured to receive a termination instruction that is sent by the Wi-Fi access point in the network and used for instructing the mobile Wi-Fi device to stop sending data; and
the Wi-Fi processing chip 802 is further configured to terminate, according to the termination instruction, data transmission performed by the mobile Wi-Fi device on the communication channel between the mobile Wi-Fi device and the Wi-Fi access point.

Further, in the embodiment of the present invention, the Wi-Fi processing chip 802 is further configured to send information including the destination channel identifier to the terminal that accesses the mobile Wi-Fi device, where the information is used to instruct the terminal to switch from the communication channel on which the terminal communicates with the mobile Wi-Fi device to the destination communication channel corresponding to the destination channel identifier.

Further, in the embodiment of the present invention, the mobile Wi-Fi device has a single Wi-Fi chip, and the Wi-Fi processing chip 802 in the mobile Wi-Fi device is disposed on the Wi-Fi chip.

In the embodiment of the present invention, a mobile Wi-Fi device obtains a channel switching instruction sent by a Wi-Fi access point in a network, where the channel switching instruction carries a destination channel identifier; and the mobile Wi-Fi device switches a communication channel between the mobile Wi-Fi device and the Wi-Fi access point, and a communication channel between the mobile Wi-Fi device and a terminal that accesses the mobile Wi-Fi device to a destination communication channel corresponding to the destination channel identifier carried in the channel switching instruction, which avoids the problem that a Wi-Fi client and a Wi-Fi access end of a mobile Wi-Fi device are switched to different communication channels when channel switching is performed. The Wi-Fi client and Wi-Fi access end of the mobile Wi-Fi device then still work on a same communication channel after performing the channel switching, thereby improving compatibility, a throughput, and stability of the mobile Wi-Fi device.

The present invention is described with reference to the flowcharts and/or block diagrams of the method and device (system) according to the embodiments of the present invention, and a computer program product. It should be understood that computer program instructions may be used to implement each process and/or each block in the flowcharts and/or block diagrams, and a combination of a process and/or a block in the flowcharts and/or the block diagrams. These computer program instructions may be provided for a general-purpose computer, a dedicated computer, a built-in processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may also be stored in a computer readable memory that can instruct a computer or another programmable data processing device to work in a specified manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed in the computer or the another programmable device, thereby generating computer-implemented processing. Therefore, the instructions executed in the computer or the another programmable device provide steps for implementing a specific function in one or more processes in the flowcharts and/or in one or more blocks in the block diagrams.

Although preferred embodiments of the present invention have been described, persons skilled in the art can make changes and modifications to the embodiments once they learn basic inventive concepts. Therefore, the following claims are intended to be construed as to cover the preferred embodiments and all changes and modifications falling within the scope of the present invention.

Obviously, persons skilled in the art can make various modifications and variations to the present invention without departing from the scope of the present invention. The present invention is intended to cover these modifications and variations provided that the modifications and variations fall within the scope of protection defined by the following claims.

## Claims

1. A channel switching method of a mobile Wi-Fi device, the mobile Wi-Fi device comprising a Wi-Fi access point, Wi-Fi AP, and a Wi-Fi client, Wi-Fi STA, the mobile Wi-Fi device accessing a Wi-Fi access point in a network by the Wi-Fi STA, the Wi-Fi AP is configured for communication between the mobile Wi-Fi device and a terminal that accesses the mobile Wi-Fi device, comprising:
obtaining (301), by the mobile Wi-Fi device, a channel switching instruction sent by the Wi-Fi access point, wherein the channel switching instruction carries a destination channel identifier;
switching (302), by the mobile Wi-Fi device, from a first communication channel between the mobile Wi-Fi device and the Wi-Fi access point to a destination communication channel corresponding to the destination channel identifier carried in the channel switching instruction between the mobile Wi-Fi device and the Wi-Fi access point;
sending, by the mobile Wi-Fi device, a channel switching instruction comprising the destination channel identifier to the terminal after the Wi-Fi STA in the mobile e Wi-Fi device switches to the destination communication channel; and
switching (302), by the mobile Wi-Fi device, according to the channel switching instruction. from a first communication channel between the mobile Wi-Fi device and the terminal that accesses the mobile Wi-Fi device to the destination communication channel corresponding to the destination channel identifier between the mobile Wi-Fi device and the terminal that accesses the mobile Wi-Fi device.

2. The method according to claim 1, before switching, by the mobile Wi-Fi device according to the destination channel identifier, from a first communication channel between the mobile Wi-Fi device and the Wi-Fi access point, and from a first communication channel between the mobile Wi-Fi device and the terminal that accesses the mobile Wi-Fi device to a destination communication channel corresponding to the destination channel identifier; wherein the destination communication channel is different from the first communication channel, further comprising:
receiving, by the mobile Wi-Fi device, a termination instruction that is sent by the Wi-Fi access point and used for instructing the mobile Wi-Fi device to stop transmitting data; and
terminating, by the mobile Wi-Fi device according to the termination instruction, data transmission performed by the mobile Wi-Fi device on the first communication channel between the mobile Wi-Fi device and the Wi-Fi access point.

3. The method according to claim 2, wherein after the terminating, by the mobile Wi-Fi device according to the termination instruction, data transmission performed by the mobile Wi-Fi device on the communication channel between the mobile Wi-Fi device and the Wi-Fi access point, further comprising:
sending the termination instruction to the terminal that accesses the mobile Wi-Fi device, so as to instruct the terminal to stop transmitting data on the first communication channel on which the terminal communicates with the mobile Wi-Fi device.

4. The method according to any one of claims 2 to 3, wherein switching, by the mobile Wi-Fi device according to the destination channel identifier, from the first communication channel between the mobile Wi-Fi device and the Wi-Fi access point, and from the first communication channel between the mobile Wi-Fi device and a terminal that accesses the mobile Wi-Fi device to a destination communication channel corresponding to the destination channel identifier, further comprising:
after the switching, by the mobile Wi-Fi device according to the destination channel identifier, from the first communication channel between the mobile Wi-Fi device and the Wi-Fi access point, switching, by the mobile Wi-Fi device according to the destination channel identifier, from the first communication channel between the mobile Wi-Fi device and a terminal that accesses the mobile Wi-Fi device to a destination communication channel corresponding to the destination channel identifier.

5. A mobile Wi-Fi device, comprising:
at least one processor; a Wi-Fi access point, Wi-Fi AP, and a Wi-Fi client, Wi-Fi STA, wherein the mobile Wi-Fi device accesses a Wi-Fi access point in a network by the Wi-Fi STA, the Wi-Fi AP is configured for communication between the Mobile Wi-Fi device and a terminal that accesses the mobile Wi-Fi device, and
at least one memory, the at least one memory comprising instructions that when executed by the at least one processor, cause the device to perform, at least, the following:
obtaining, by the mobile Wi-Fi device, a channel switching instruction sent by the Wi-Fi access point, wherein the channel switching instruction carries a destination channel identifier;
switching, by the mobile Wi-Fi device, from a first communication channel between the mobile Wi-Fi device and the Wi-Fi access point to the destination communication channel corresponding to the destination channel identifier carried in the channel switching instruction between the mobile Wi-Fi device and the Wi-Fi access point;
sending, by the mobile Wi-Fi device, a channel switching instruction comprising the destination channel identifier to the terminal after the Wi-Fi STA in the mobile e Wi-Fi device switches to the destination communication channel; and
switching, by the mobile Wi-Fi device to, according to the channel switching instruction, from a first communication channel between the mobile Wi-Fi device and the terminal that accesses the mobile Wi-Fi device to the destination communication channel corresponding to the destination channel identifier between the mobile Wi-Fi device and the terminal that accesses the mobile Wi-Fi device.

6. The device according to claim claim 5, wherein the at least one memory further comprises instructions that when executed by the at least one processor, cause the device to perform the following: before switching, by the mobile Wi-Fi device according to the destination channel identifier, from a first communication channel between the mobile Wi-Fi device and the Wi-Fi access point, and from the first communication channel between the mobile Wi-Fi device and a terminal that accesses the mobile Wi-Fi device to a destination communication channel corresponding to the destination channel identifier; wherein the destination communication channel is different from the first communication channel, further:
receiving, by the mobile Wi-Fi device, a termination instruction that is sent by the Wi-Fi access point and used for instructing the mobile Wi-Fi device to stop transmitting data; and
terminating, by the mobile Wi-Fi device according to the termination instruction, data transmission performed by the mobile Wi-Fi device on the first communication channel between the mobile Wi-Fi device and the Wi-Fi access point.

7. The device according to claim 6, wherein the at least one memory further comprises instructions that when executed by the at least one processor, cause the device to perform the following: after the terminating, by the mobile Wi-Fi device according to the termination instruction, data transmission performed by the mobile Wi-Fi device on the communication channel between the mobile Wi-Fi device and the Wi-Fi access point, further :
sending the termination instruction to the terminal that accesses the mobile Wi-Fi device, so as to instruct the terminal to stop transmitting data on the first communication channel on which the terminal communicates with the mobile Wi-Fi device.

8. The device according to claim any one of claims 6 to 7, wherein the at least one memory further comprises instructions that when executed by the at least one processor, cause the device to perform the following: after the switching, by the mobile Wi-Fi device according to the destination channel identifier, from the first communication channel between the mobile Wi-Fi device and the Wi-Fi access point, switching, by the mobile Wi-Fi device according to the destination channel identifier, from the first communication channel between the mobile Wi-Fi device and a terminal that accesses the mobile Wi-Fi device to a destination communication channel corresponding to the destination channel identifier.

9. A chip, connected to a transceiver, the chip being configured to carry out the steps of the method of claims 1-4

## Patentansprüche

1. Kanalumschaltverfahren einer mobilen Wi-Fi-Einrichtung, wobei die mobile Wi-Fi-Einrichtung einen Wi-Fi-Zugriffspunkt, Wi-Fi-AP, und eine Wi-Fi-Station, Wi-Fi-STA, umfasst, die mobile Wi-Fi-Einrichtung auf einen Wi-Fi-Zugriffspunkt in einem Netzwerk durch die Wi-Fi-STA zugreift, der Wi-Fi-AP für eine Kommunikation zwischen der mobilen Wi-Fi-Einrichtung und einem Endgerät, das auf die mobile Wi-Fi-Einrichtung zugreift, ausgelegt ist, umfassend:
Erhalten (301), durch die mobile Wi-Fi-Einrichtung, einer durch den Wi-Fi-Zugriffspunkt gesendeten Kanalumschaltanweisung, wobei die Kanalumschaltanweisung einen Zielkanalidentifikator enthält;
Umschalten (302), durch die mobile Wi-Fi-Einrichtung, von einem ersten Kommunikationskanal zwischen der mobilen Wi-Fi-Einrichtung und dem Wi-Fi-Zugriffspunkt auf einen Zielkommunikationskanal entsprechend dem Zielkanalidentifikator, der in der Kanalumschaltanweisung zwischen der mobilen Wi-Fi-Einrichtung und dem Wi-Fi-Zugriffspunkt enthalten ist;
Senden, durch die mobile Wi-Fi-Einrichtung, einer Kanalumschaltanweisung umfassend den Zielkanalidentifikator an das Endgerät, nachdem die Wi-Fi-STA in der mobilen Wi-Fi-Einrichtung auf den Zielkommunikationskanal umschaltet; und
Umschalten (302), durch die mobile Wi-Fi-Einrichtung, gemäß der Kanalumschaltanweisung, von einem ersten Kommunikationskanal zwischen der mobilen Wi-Fi-Einrichtung und dem Endgerät, das auf die mobile Wi-Fi-Einrichtung zugreift, auf den Zielkommunikationskanal entsprechend dem Zielkanalidentifikator zwischen der mobilen Wi-Fi-Einrichtung und dem Endgerät, das auf die mobile Wi-Fi-Einrichtung zugreift.

2. Verfahren nach Anspruch 1, vor dem Umschalten, durch die mobile Wi-Fi-Einrichtung gemäß dem Zielkanalidentifikator, von einem ersten Kommunikationskanal zwischen der mobilen Wi-Fi-Einrichtung und dem Wi-Fi-Zugriffspunkt und von einem ersten Kommunikationskanal zwischen der mobilen Wi-Fi-Einrichtung und dem Endgerät, das auf die mobile Wi-Fi-Einrichtung zugreift, auf einen Zielkommunikationskanal entsprechend dem Zielkanalidentifikator; wobei der Zielkommunikationskanal von dem ersten Kommunikationskanal verschieden ist, ferner umfassend:
Empfangen, durch die mobile Wi-Fi-Einrichtung, einer Beendigungsanweisung, die durch den Wi-Fi-Zugriffspunkt gesendet und verwendet wird, um die mobile Wi-Fi-Einrichtung anzuweisen, das Übertragen von Daten zu stoppen; und
Beenden, durch die mobile Wi-Fi-Einrichtung gemäß der Beendigungsanweisung, der Datenübertragung, die durch die mobile Wi-Fi-Einrichtung auf dem ersten Kommunikationskanal zwischen der mobilen Wi-Fi-Einrichtung und dem Wi-Fi-Zugriffspunkt durchgeführt wird.

3. Verfahren nach Anspruch 2, wobei nach dem Beenden, durch die mobile Wi-Fi-Einrichtung gemäß der Beendigungsanweisung, der Datenübertragung, die durch die mobile Wi-Fi-Einrichtung auf dem ersten Kommunikationskanal zwischen der mobilen Wi-Fi-Einrichtung und dem Wi-Fi-Zugriffspunkt durchgeführt wird, ferner umfassend:
Senden der Beendigungsanweisung an das Endgerät, das auf die mobile Wi-Fi-Einrichtung zugreift, um das Endgerät anzuweisen, das Übertragen von Daten auf dem ersten Kommunikationskanal, auf dem das Endgerät mit der mobilen Wi-Fi-Einrichtung kommuniziert, zu stoppen.

4. Verfahren nach einem der Ansprüche 2 bis 3, wobei das Umschalten, durch die mobile Wi-Fi-Einrichtung gemäß dem Zielkanalidentifikator, von dem ersten Kommunikationskanal zwischen der mobilen Wi-Fi-Einrichtung und dem Wi-Fi-Zugriffspunkt und von dem ersten Kommunikationskanal zwischen der mobilen Wi-Fi-Einrichtung und einem Endgerät, das auf die mobile Wi-Fi-Einrichtung zugreift, auf einen Zielkommunikationskanal entsprechend dem Zielkanalidentifikator, ferner umfassend:
nach dem Umschalten, durch die mobile Wi-Fi-Einrichtung gemäß dem Zielkanalidentifikator, von dem ersten Kommunikationskanal zwischen der mobilen Wi-Fi-Einrichtung und dem Wi-Fi-Zugriffspunkt, Umschalten, durch die mobile Wi-Fi-Einrichtung gemäß dem Zielkanalidentifikator, von dem ersten Kommunikationskanal zwischen der mobilen Wi-Fi-Einrichtung und einem Endgerät, das auf die mobile Wi-Fi-Einrichtung zugreift, auf einen Zielkommunikationskanal entsprechend dem Zielkanalidentifikator.

5. Mobile Wi-Fi-Einrichtung, umfassend:
zumindest einen Prozessor;
einen Wi-Fi-Zugriffspunkt Wi-Fi-AP, und eine Wi-Fi-Station, Wi-Fi-STA, wobei die mobile Wi-Fi-Einrichtung auf einen Wi-Fi-Zugriffspunkt in einem Netzwerk durch die Wi-Fi-STA zugreift, der Wi-Fi-AP für eine Kommunikation zwischen der mobilen Wi-Fi-Einrichtung und einem Endgerät, das auf die mobile Wi-Fi-Einrichtung zugreift, ausgelegt ist, und
zumindest einen Speicher, wobei der zumindest eine Speicher Anweisungen umfasst, die bei Ausführung durch den zumindest einen Prozessor die Einrichtung dazu veranlassen, zumindest das Folgende durchzuführen:
Erhalten, durch die mobile Wi-Fi-Einrichtung, einer durch den Wi-Fi-Zugriffspunkt gesendeten Kanalumschaltanweisung, wobei die Kanalumschaltanweisung einen Zielkanalidentifikator enthält;
Umschalten, durch die mobile Wi-Fi-Einrichtung, von einem ersten Kommunikationskanal zwischen der mobilen Wi-Fi-Einrichtung und dem Wi-Fi-Zugriffspunkt auf den Zielkommunikationskanal entsprechend dem Zielkanalidentifikator, der in der Kanalumschaltanweisung zwischen der mobilen Wi-Fi-Einrichtung und dem Wi-Fi-Zugriffspunkt enthalten ist;
Senden, durch die mobile Wi-Fi-Einrichtung, einer Kanalumschaltanweisung umfassend den Zielkanalidentifikator an das Endgerät, nachdem die Wi-Fi-STA in der mobilen Wi-Fi-Einrichtung auf den Zielkommunikationskanal umschaltet; und
Umschalten, durch die mobile Wi-Fi-Einrichtung, gemäß der Kanalumschaltanweisung, von einem ersten Kommunikationskanal zwischen der mobilen Wi-Fi-Einrichtung und einem Endgerät, das auf die mobile Wi-Fi-Einrichtung zugreift, auf den Zielkommunikationskanal entsprechend dem Zielkanalidentifikator zwischen der mobilen Wi-Fi-Einrichtung und dem Endgerät, das auf die mobile Wi-Fi-Einrichtung zugreift.

6. Einrichtung nach Anspruch 5, wobei der zumindest eine Speicher ferner Anweisungen umfasst, die bei Ausführung durch den zumindest einen Prozessor die Einrichtung dazu veranlassen, das Folgende durchzuführen: vor dem Umschalten, durch die mobile Wi-Fi-Einrichtung gemäß dem Zielkanalidentifikator, von einem ersten Kommunikationskanal zwischen der mobilen Wi-Fi-Einrichtung und dem Wi-Fi-Zugriffspunkt und von dem ersten Kommunikationskanal zwischen der mobilen Wi-Fi-Einrichtung und einem Endgerät, das auf die mobile Wi-Fi-Einrichtung zugreift, auf einen Zielkommunikationskanal entsprechend dem Zielkanalidentifikator; wobei der Zielkommunikationskanal von dem ersten Kommunikationskanal verschieden ist, ferner:
Empfangen, durch die mobile Wi-Fi-Einrichtung, einer Beendigungsanweisung, die durch den Wi-Fi-Zugriffspunkt gesendet und verwendet wird, um die mobile Wi-Fi-Einrichtung anzuweisen, das Übertragen von Daten zu stoppen; und
Beenden, durch die mobile Wi-Fi-Einrichtung gemäß der Beendigungsanweisung, der Datenübertragung, die durch die mobile Wi-Fi-Einrichtung auf dem ersten Kommunikationskanal zwischen der mobilen Wi-Fi-Einrichtung und dem Wi-Fi-Zugriffspunkt durchgeführt wird.

7. Einrichtung nach Anspruch 6, wobei der zumindest eine Speicher ferner Anweisungen umfasst, die bei Ausführung durch den zumindest einen Prozessor die Einrichtung dazu veranlassen, das Folgende durchzuführen: nach dem Beenden, durch die mobile Wi-Fi-Einrichtung gemäß der Beendigungsanweisung, der Datenübertragung, die durch die mobile Wi-Fi-Einrichtung auf dem ersten Kommunikationskanal zwischen der mobilen Wi-Fi-Einrichtung und dem Wi-Fi-Zugriffspunkt durchgeführt wird, ferner:
Senden der Beendigungsanweisung an das Endgerät, das auf die mobile Wi-Fi-Einrichtung zugreift, um das Endgerät anzuweisen, das Übertragen von Daten auf dem ersten Kommunikationskanal, auf dem das Endgerät mit der mobilen Wi-Fi-Einrichtung kommuniziert, zu stoppen.

8. Einrichtung nach einem der Ansprüche 6 bis 7, wobei der zumindest eine Speicher ferner Anweisungen umfasst, die bei Ausführung durch den zumindest einen Prozessor die Einrichtung dazu veranlassen, das Folgende durchzuführen: nach dem Umschalten, durch die mobile Wi-Fi-Einrichtung gemäß dem Zielkanalidentifikator, von dem ersten Kommunikationskanal zwischen der mobilen Wi-Fi-Einrichtung und dem Wi-Fi-Zugriffspunkt, Umschalten, durch die mobile Wi-Fi-Einrichtung gemäß dem Zielkanalidentifikator, von dem ersten Kommunikationskanal zwischen der mobilen Wi-Fi-Einrichtung und einem Endgerät, das auf die mobile Wi-Fi-Einrichtung zugreift, auf einen Zielkommunikationskanal entsprechend dem Zielkanalidentifikator.

9. Chip, der mit einem Transceiver verbunden ist, wobei der Chip die Schritte des Verfahrens nach Ansprüchen 1-4 ausführen soll.

## Revendications

1. Procédé de commutation de canal d'un dispositif Wi-Fi mobile, le dispositif Wi-Fi mobile comprenant un AP Wi-Fi et une STA Wi-Fi, le dispositif Wi-Fi mobile accédant à un point d'accès Wi-Fi dans un réseau par la STA Wi-Fi, l'AP Wi-Fi étant configuré pour une communication entre le dispositif Wi-Fi mobile et un terminal qui accède au dispositif Wi-Fi mobile, comprenant :
l'obtention (301), par le dispositif Wi-Fi mobile, d'une instruction de commutation de canal envoyée par le point d'accès Wi-Fi, l'instruction de commutation de canal véhiculant un identifiant de canal de destination ;
la commutation (302), par le dispositif Wi-Fi mobile, depuis un premier canal de communication entre le dispositif Wi-Fi mobile et le point d'accès Wi-Fi sur un canal de communication de destination correspondant à l'identifiant de canal de destination véhiculé dans l'instruction de commutation de canal entre le dispositif Wi-Fi mobile et le point d'accès Wi-Fi ;
l'envoi, par le dispositif Wi-Fi mobile, d'une instruction de commutation de canal comprenant l'identifiant de canal de destination au terminal après la commutation de la STA Wi-Fi dans le dispositif Wi-Fi mobile sur le canal de communication de destination ; et
la commutation (302), par le dispositif Wi-Fi mobile, selon l'instruction de commutation de canal, depuis un premier canal de communication entre le dispositif Wi-Fi mobile et le terminal qui accède au dispositif Wi-Fi mobile sur le canal de communication de destination correspondant à l'identifiant de canal de destination entre le dispositif Wi-Fi mobile et le terminal qui accède au dispositif Wi-Fi mobile.

2. Procédé selon la revendication 1, comprenant en outre, avant la commutation, par le dispositif Wi-Fi mobile selon l'identifiant de canal de destination, depuis un premier canal de communication entre le dispositif Wi-Fi mobile et le point d'accès Wi-Fi et depuis un premier canal de communication entre le dispositif Wi-Fi mobile et le terminal qui accède au dispositif Wi-Fi mobile sur un canal de communication de destination correspondant à l'identifiant de canal de destination, le canal de communication de destination étant différent du premier canal de communication :
la réception, par le dispositif Wi-Fi mobile, d'une instruction d'arrêt qui est envoyée par le point d'accès Wi-Fi et sert à donner pour instruction au dispositif Wi-Fi mobile de cesser de transmettre des données ; et
l'arrêt, par le dispositif Wi-Fi mobile selon l'instruction d'arrêt, d'une transmission de données réalisée par le dispositif Wi-Fi mobile sur le premier canal de communication entre le dispositif Wi-Fi mobile et le point d'accès Wi-Fi.

3. Procédé selon la revendication 2, dans lequel, après l'arrêt, par le dispositif Wi-Fi mobile selon l'instruction d'arrêt, d'une transmission de données réalisée par le dispositif Wi-Fi mobile sur le canal de communication entre le dispositif Wi-Fi mobile et le point d'accès Wi-Fi, comprenant en outre :
l'envoi de l'instruction d'arrêt au terminal qui accède au dispositif Wi-Fi mobile de manière à donner pour instruction au terminal de cesser de transmettre des données sur le premier canal de communication sur lequel le terminal communique avec le dispositif Wi-Fi mobile.

4. Procédé selon l'une quelconque des revendications 2 et 3, dans lequel la commutation, par le dispositif Wi-Fi mobile selon l'identifiant de canal de destination, depuis le premier canal de communication entre le dispositif Wi-Fi mobile et le point d'accès Wi-Fi et depuis le premier canal de communication entre le dispositif Wi-Fi mobile et un terminal qui accède au dispositif Wi-Fi mobile sur un canal de communication de destination correspondant à l'identifiant de canal de destination comprenant en outre : après la commutation, par le dispositif Wi-Fi mobile selon l'identifiant de canal de destination, depuis le premier canal de communication entre le dispositif Wi-Fi mobile et le point d'accès Wi-Fi, la commutation, par le dispositif Wi-Fi mobile selon l'identifiant de canal de destination, depuis le premier canal de communication entre le dispositif Wi-Fi mobile et un terminal qui accède au dispositif Wi-Fi mobile sur un canal de communication de destination correspondant à l'identifiant de canal de destination.

5. Dispositif Wi-Fi mobile, comprenant :
au moins un processeur ;
un AP Wi-Fi et une STA Wi-Fi, le dispositif Wi-Fi mobile accédant à un point d'accès Wi-Fi dans un réseau par la STA Wi-Fi, l'AP Wi-Fi étant configuré pour une communication entre le dispositif Wi-Fi mobile et un terminal qui accède au dispositif Wi-Fi mobile, et
au moins une mémoire, l'au moins une mémoire comprenant des instructions qui, lorsqu'elles sont exécutées par l'au moins un processeur, amènent le dispositif à réaliser au moins ce qui suit :
l'obtention, par le dispositif Wi-Fi mobile, d'une instruction de commutation de canal envoyée par le point d'accès Wi-Fi, l'instruction de commutation de canal véhiculant un identifiant de canal de destination ;
la commutation, par le dispositif Wi-Fi mobile, depuis un premier canal de communication entre le dispositif Wi-Fi mobile et le point d'accès Wi-Fi sur le canal de communication de destination correspondant à l'identifiant de canal de destination véhiculé dans l'instruction de commutation de canal entre le dispositif Wi-Fi mobile et le point d'accès Wi-Fi ;
l'envoi, par le dispositif Wi-Fi mobile, d'une instruction de commutation de canal comprenant l'identifiant de canal de destination au terminal après la commutation de la STA Wi-Fi dans le dispositif Wi-Fi mobile sur le canal de communication de destination ; et
la commutation, par le dispositif Wi-Fi mobile sur, selon l'instruction de commutation de canal, depuis un premier canal de communication entre le dispositif Wi-Fi mobile et le terminal qui accède au dispositif Wi-Fi mobile sur le canal de communication de destination correspondant à l'identifiant de canal de destination entre le dispositif Wi-Fi mobile et le terminal qui accède au dispositif Wi-Fi mobile.

6. Dispositif selon la revendication 5, dans lequel l'au moins une mémoire comprend en outre des instructions qui, lorsqu'elles sont exécutées par l'au moins un processeur, amènent le dispositif à réaliser ce qui suit :
avant la commutation, par le dispositif Wi-Fi mobile selon l'identifiant de canal de destination, depuis un premier canal de communication entre le dispositif Wi-Fi mobile et le point d'accès Wi-Fi et depuis le premier canal de communication entre le dispositif Wi-Fi mobile et un terminal qui accède au dispositif Wi-Fi mobile sur un canal de communication de destination correspondant à l'identifiant de canal de destination, le canal de communication de destination étant différent du premier canal de communication, en outre :
la réception, par le dispositif Wi-Fi mobile, d'une instruction d'arrêt qui est envoyée par le point d'accès Wi-Fi et sert à donner pour instruction au dispositif Wi-Fi mobile de cesser de transmettre des données ; et
l'arrêt, par le dispositif Wi-Fi mobile selon l'instruction d'arrêt, d'une transmission de données réalisée par le dispositif Wi-Fi mobile sur le premier canal de communication entre le dispositif Wi-Fi mobile et le point d'accès Wi-Fi.

7. Dispositif selon la revendication 6, dans lequel l'au moins une mémoire comprend en outre des instructions qui, lorsqu'elles sont exécutées par l'au moins un processeur, amènent le dispositif à réaliser ce qui suit :
après l'arrêt, par le dispositif Wi-Fi mobile selon l'instruction d'arrêt, d'une transmission de données réalisée par le dispositif Wi-Fi mobile sur le canal de communication entre le dispositif Wi-Fi mobile et le point d'accès Wi-Fi, en outre :
l'envoi de l'instruction d'arrêt au terminal qui accède au dispositif Wi-Fi mobile de manière à donner pour instruction au terminal de cesser de transmettre des données sur le premier canal de communication sur lequel le terminal communique avec le dispositif Wi-Fi mobile.

8. Dispositif selon l'une quelconque des revendications 6 et 7, dans lequel l'au moins une mémoire comprend en outre des instructions qui, lorsqu'elles sont exécutées par l'au moins un processeur, amènent le dispositif à réaliser ce qui suit :
après la commutation, par le dispositif Wi-Fi mobile selon l'identifiant de canal de destination, depuis le premier canal de communication entre le dispositif Wi-Fi mobile et le point d'accès Wi-Fi, la commutation, par le dispositif Wi-Fi mobile selon l'identifiant de canal de destination, depuis le premier canal de communication entre le dispositif Wi-Fi mobile et un terminal qui accède au dispositif Wi-Fi mobile sur un canal de communication de destination correspondant à l'identifiant de canal de destination.

9. Puce, connectée à un émetteur-récepteur, la puce étant destinée à mettre en œuvre les étapes du procédé des revendications 1-4.
